# EUROPEAN PATENT APPLICATION

(11) **EP 1 724 737 A2**
(43) Date of publication of application: **22.11.2006**
(21) Application number: 06113957.2
(22) Date of filing: 15.05.2006
(51) Int. Cl.: G08B 17/00

(54) **Fire alarm system**

(30) Priority: 14.05.2005 GB 0509955
(71) Applicant: RAFIKI HOLDINGS LIMITED, South Wales Gwent Cwmbran NP44 5BD (GB)
(72) Inventor: Amlani, Manhar, Llanishen, Cardiff, CF14 ORD (GB)
(74) Representative: Evans, Huw David Duncan

(57) **Abstract**

A fire alarm system comprises a control unit 10 arranged to be powered from a mains supply M, a plurality of heat and/or smoke detectors 14 connected in parallel across a two-wire circuit 12 extending from the control unit 10, and a plurality of audible alarm devices 18 connected in parallel across the two-wire circuit 12. The control unit 10 provides current to the two-wire circuit 12 from the mains supply M and sensing means in the control unit 10 detects a change in current drawn in the event of any of the detectors 14 being activated, in order to energise the audible alarm devices 18. A plurality of emergency lights 20 are also connected to the two-wire circuit 12 and the control unit 10 further includes means 22 for detecting the failure of the mains supply M to cause the emergency lights 20 to be energised from one or more battery power sources.

## Description

The present invention relates to a fire alarm system, to a control unit or panel for such a fire alarm system, and also to an alarm unit for such a system.

A known fire alarm system comprises a central control unit, or control panel, and a number of heat or smoke detectors connected in parallel across a two-wire circuit which extends from the control panel. A number of audible alarms or sounders are also connected in parallel across the same two-wire circuit. The control panel is powered from the mains and arranged to place a dc potential across the wires of the two-wire circuit. In the event of any of the heat or smoke detectors being activated (in response to excessive heat or the presence of smoke, indicative of a possible fire condition), the detector periodically connects a load across the two-wire circuit, so periodically increasing the current flowing in this circuit. These current pulses are sensed by the control panel, which then transmits a signal (e.g. by applying a coded series of voltage pulses across the two wires of the two-wire circuit) to switch on the audible alarms, which then draw their energising current from the two-wire circuit.

In other known fire alarm systems, the audible alarms are connected across a second two-wire circuit which also extends from the control panel. The control panel normally places a reverse polarity potential across the wires of this second two-wire circuit, but changes this to a forward potential in response to any of the detectors being activated, in order to energise the audible alarms.

In addition to providing buildings (e.g. offices or other workplaces and buildings open to the public) with fire alarm systems, it is also a requirement to provide such buildings with an emergency lighting system, arranged to provide lighting powered from batteries in the event of a failure of the mains supply for the normal lighting system.

We have now devised a fire alarm system which also includes an emergency light provision.

In accordance with the present invention, there is provided a fire alarm system which comprises a control unit arranged to be powered from a mains supply, a plurality of heat and/or smoke detectors connected in parallel across a two-wire circuit extending from the control unit, and a plurality of audible alarm devices connected in parallel across the same two-wire circuit or across a second two-wire circuit also extending from the control unit, the control unit including means powered from the mains supply to provide current to the or both two-wire circuits and sensing means to detect a change in current drawn in the event of any of said detectors being activated, in order to energise said audible alarm devices, the system further comprising a plurality of emergency lights and the control unit further including means for detecting the failure of the mains supply in order to cause the emergency lights to be energised from one or more battery power sources.

The battery power source for the emergency lights may be provided by a battery included in the control unit, which also maintains the fire alarm system in the absence of mains power. Alternatively, the emergency lights may include their own battery power sources.

In a two-wire fire alarm system, the emergency lights are preferably connected across the wires of the two-wire circuit. In the event of a mains failure, the control unit transmits a signal over the two-wire circuit to switch the emergency lights on, either to draw current from their own batteries or from the control unit battery, over the two-wire circuit.

In a four-wire fire alarm system, the emergency lights are preferably connected across the second two-wire circuit. In the event of a mains failure, the control unit may change the reverse polarity potential, normally applied across the wires of the second two-wire circuit, from one value to another (preferably increasing it from say 24 volts to say 26 volts), in order to switch on the emergency lights. Again, the emergency lights then draw current either from their own batteries or, over the two-wire circuit, from the control unit battery.

Each of the emergency lights may comprise a number of white LED's, preferably connected in series with one another. The alarm system may comprise a number of combined units, each comprising a heat and/or smoke detector and an audible alarm: this unit may additionally include an emergency light, for example disposed on the underside of the unit, which is arranged to be mounted to the ceiling.

The fire alarm system will generally be required to include a number of warning lights, typically red lights which are energised in pulsed or strobed manner, to provide a distinctive visual alarm in addition to the audible warning provided by the audible alarms or sounders, in the event of one of the heat and/or smoke detectors being activated.

In a fire alarm system in accordance with the present invention, preferably the control unit is arranged for the emergency lights to remain energised for a predetermined period (say 1 hour) once switched on in response to the detection of a mains failure, and then to switch the emergency lights off. The control unit is further arranged so that, at the end of a longer predetermined period (say 24 hours), it causes the audible alarms (and/or the warning or alarm lights) to be energised for a period (say 20 minutes).

The warning or alarm lights may be incorporated in the same units as the emergency lights. Preferably the warning lights comprise a number of red LED's, connected in series with each and other but in anti-parallel to the series of white LED's forming the emergency light. The unit is then arranged to draw current (from its two-wire circuit) in one direction through the anti-parallel circuit in order to energise the red LED's (thus providing the visual fire alarm), or in the opposite direction to energise the white LED's (to provide the emergency light).

Also in accordance with the present invention, there is provided a control unit for a fire alarm system as defined above, the control unit including means for detecting failure of its mains supply and arranged for energising emergency lights from a battery source of the control unit, or for transmitting a signal to emergency lights for energising them from their own battery sources.

Further in accordance with the present invention, there is provided a combined alarm and emergency light unit for a fire alarm system as defined above, said combined unit comprising an audible alarm and/or a warning light arranged to be energised in the event of an alarm condition, and also comprising an emergency light.

Embodiments of the present invention will now be described by way of examples only and with reference to the accompanying drawings, in which:
FIGURE 1 is a schematic diagram of a first embodiment of fire alarm system in accordance with the present invention, which incorporates emergency lights; and
FIGURE 2 is a schematic diagram of a second embodiment of fire alarm system in accordance with the present invention, which also incorporates emergency lights.

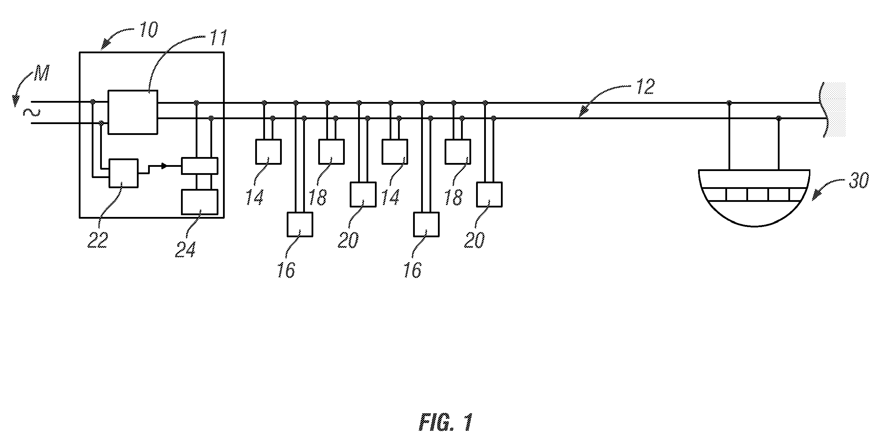

Referring to Figure 1 of the drawings, there is shown a fire alarm system which comprises a control panel 10 having a two-wire circuit 12 extending from it. The system is powered by an ac mains electricity supply M connected to the control panel 10: the control panel 10 includes a circuit 11 which derives, from the mains supply, a 24 volts dc output which is applied across the two wires of the circuit 12. A number of detectors 14 are connected in parallel across the two wires of the circuit 12, and a number of manual call points 16 are also connected across the two wires of circuit 12: the detectors 14 comprise heat and/or smoke detectors and are accordingly arranged to respond in the event of a possible fire condition. In addition, a number of audible alarm or sounders 18 are connected across the two wires of the circuit 12. The detectors 14 and sounders 18 may comprise individual units which are separate from one another, or alternatively the system may comprise a number of combined units, each having a detector 14 and a sounder 18.

The alarm system so far described, with reference to Figure 1, is of known type. In the event that any one of the detectors 14 is activated (in response to excess heat or the presence of smoke) or one of the call points 16 is manually operated, then the device concerned periodically connects a load across the two wires of the circuit 12, so periodically increasing the current flowing through the circuit 12. A sensing circuit of the control panel 10 senses these current pulses in order to transmit a signal over the circuit 12 to switch on the sounders 18: this signal comprises a coded series of voltage pulses applied across the two wires of the circuit 12, superimposed on the normal dc voltage; once switched on, the alarm devices 18 draw their energising current from the two wire circuit 12.

In accordance with the present invention, a number of emergency lights 20 are connected in parallel across the two wires of the circuit 12. Further, the control panel includes a sensing circuit 22 which detects any failure of the mains supply, in order to transmit a signal over the two-wire circuit 12 to switch on the emergency lights 20: the emergency lights 20 may include their own batteries, from which they draw current, or alternatively they may draw current over the two-wire circuit 12 from a standby battery 24 in the control panel 10.

The alarm system shown in Figure 1 may include combined units, one being shown at on an enlarged scale at 30, which comprises a heat and/or smoke detector, an audible alarm or sounder and an emergency light. In the unit 30, the emergency light comprises a number of white LED's positioned on the underside of the ceiling-mounted unit and arranged to draw current from the standby battery in the control panel 10, over the two-wire circuit 12.

For providing a visual alarm, in the event of a detector 14 being activated or a call point 16 being operated, the alarm system also comprises a number of warning lights, comprising red lights connected across the two-wire circuit 12 and arranged to be energised in a pulsed or strobed manner. Each of the units 30 may comprise a number of red LED's, also positioned on the underside of the unit, to provide this visual alarm. In particular, a number of red LED's may be connected in series with each other but in anti-parallel to a series of white LED's: the unit 30 is arranged to draw current (from the two-wire circuit 12) in one direction through this anti-parallel circuit in order to energise the white LED's (forming the emergency light), and to draw current in the opposite direction through the anti-parallel circuit in order to energise the red LED's (forming the visual fire alarm).

In the event that the emergency lights are switched on by the control panel 10, following the detection of a mains failure, the control panel is arranged to maintain the emergency lights energised for a predetermined period (say 1 hour), and then to switch them off in order to conserve the standby battery, which also serves to power the fire alarm system in the absence of the mains supply. At the end of 24 hours, the control panel transmits signals to energise the audible and visual fire alarms for a period of time, say 20 minutes.

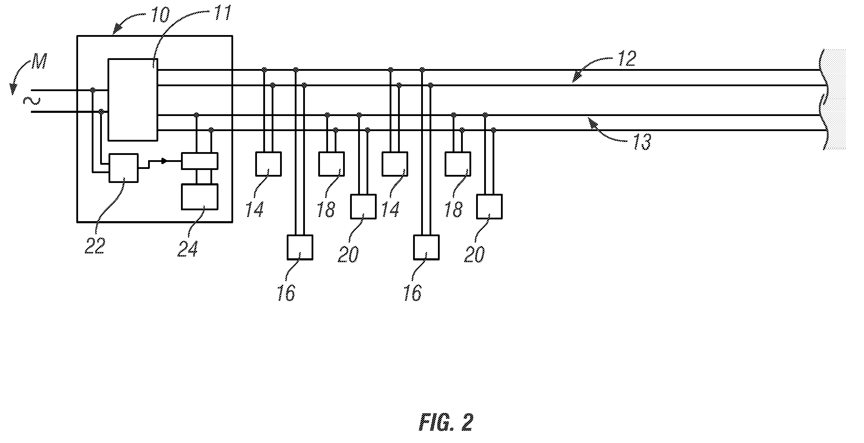

Figure 2 shows a generally similar alarm system and like parts are denoted by like reference numerals. The system differs from the system of Figure 1 in that a second two-wire circuit 13 extends from the control panel 10: the heat and/or smoke detectors 14 and call points 16 are connected across the two wires of the circuit 12, whilst the audible and visual alarms 18 and the emergency lights 20 are connected across the two wires of the circuit 13. Normally, the control panel 10 places a reverse-polarity potential of 24 volts across the two wires of circuit 13: in the event of one of the detectors 14 being activated or one of the call points 16 being operated, then that device draws a current from the control panel over the circuit 12; the control panel 10 detects this, and changes the potential across the wires of circuit 13 to a forward polarity, to energise the audible and visual alarms 18. In the event of a mains failure, detected by the control panel, the control panel increases the reverse-polarity potential applied across the wires of the two-wire circuit 13, say to 26 volts: this increased potential is sensed by the emergency lights 20 to switch them on, then drawing current either from their own batteries or from the standby battery 24 of the control panel 10.

It will be appreciated that the systems which have been described combine the fire alarm and emergency light provisions in a simple and effective manner, leading to significant savings in overall installation costs.

## Claims

1. A fire alarm system comprising a control unit arranged to be powered from a mains supply, a plurality of heat and/or smoke detectors connected in parallel across a two-wire circuit extending from the control unit, and a plurality of audible alarm devices connected in parallel across the same two-wire circuit or across a second two-wire circuit also extending from the control unit, the control unit including means powered from the mains supply to provide current to the or both two-wire circuits and sensing means to detect a change in current drawn in the event of any of said detectors being activated, in order to energise said audible alarm devices, the system further comprising a plurality of emergency lights and the control unit further including means for detecting the failure of the mains supply in order to cause the emergency lights to be energised from one or more battery power sources.

2. A fire alarm system as claimed in claim 1, in which battery power source for the emergency lights is provided by a battery included in the control unit, which battery also maintains the fire alarm system in the absence of mains power.

3. A fire alarm system as claimed in claim 1, in which battery power source for each emergency light is provided by its own battery power source.

4. A fire alarm system as claimed in any preceding claim, in which the emergency lights are connected across the wires of said first-mentioned two-wire fire alarm circuit in parallel with said detectors and said audible alarm devices.

5. A fire alarm system as claimed in claim 4, in which the control unit is arranged to transmit a signal over the two-wire circuit to switch the emergency lights on.

6. A fire alarm system as claimed in any of claims 1 to 3, in which the emergency lights are connected across the wires of said second two-wire circuit in parallel with said audible alarms.

7. A fire alarm system as claimed in claim 4, in which the control unit is arranged to change the potential, normally applied across the wires of the second two-wire circuit, from one value to another upon detection of a mains failure, in order to switch on the emergency lights.

8. A fire alarm system as claimed in any preceding claim, in which each of the emergency lights comprises a plurality of white LED's.

9. A fire alarm system as claimed in any preceding claim, comprising a plurality of combined units, each comprising a said audible alarm device and an emergency light.

10. A fire alarm system as claimed in claim 9, in which said combined units further comprise a said heat and/or smoke detector.

11. A fire alarm system as claimed in claim 9, in which said combined units further comprise a warning light which is energised to provide a visual alarm in the event of one of the heat and/or smoke detectors being activated.

12. A control unit for a fire alarm system as claimed in any preceding claim, the control unit including means for detecting failure of its mains supply and arranged for energising emergency lights from a battery source of the control unit, or for transmitting a signal to emergency lights for energising them from their own battery sources.

13. A combined alarm and emergency light unit for a fire alarm system as claimed in any preceding claim, said combined unit comprising an audible alarm and/or a warning light arranged to be energised in the event of an alarm condition, and also comprising an emergency light.

14. A fire alarm system comprising a control unit arranged to be powered from a mains supply, a plurality of heat and/or smoke detectors connected to a circuit extending from the control unit, an audible alarm device connected to said circuit, the control unit including means powered from the mains supply to provide current to the circuits and sensing means to detect activation of any of said detectors and for energising said audible alarm device, the system further comprising a plurality of emergency lights connected to said circuit and the control unit further including means for detecting the failure of the mains supply in order to cause the emergency lights to be energised from a battery power source.
